# EUROPEAN PATENT APPLICATION

(11) **EP 4 279 540 A1**
(43) Date of publication of application: **22.11.2023**
(21) Application number: 22173787.7
(22) Date of filing: 17.05.2022
(51) Int. Cl.: C08K 3/04, C08K 5/098, C09J 107/00

(54) **ADHESION-PROMOTING SYSTEM FOR A RUBBER COMPOSITION**

(71) Applicant: ALLNEX GERMANY GmbH, 65203 Wiesbaden (DE)
(72) Inventor: BLANCO TRILLO, Roberto, 65203 Wiesbaden (DE); WALTHER, Patrick, 64295 DARMSTADT (DE)
(74) Representative: Allnex Germany GmbH

(57) **Abstract**

An adhesion-promoting system for a rubber composition, wherein the system comprises a novolac resin prepared by reaction of an aldehyde A1 with a phenolic compound; and an organic manganese salt.

## Description

### Technical Field

The present disclosure relates to the field of adhesion-promoting systems for rubber compositions. The present disclosure is further directed to a rubber composition comprising an adhesion-promoting system, to a process of manufacturing a rubber article and to a method of using an adhesion-promoting system.

### Background

In the conventional manufacturing of various rubber articles such as automobile tires and conveyor belts, reinforcing material such as metal or synthetic fibers are usually used to enhance their performance. In order to ensure long-term properties of these reinforced rubber articles, it is of outmost importance to provide adequate adhesion between the reinforcing material and the rubber-based composition used to manufacture the rubber good. The most frequent solution to ensure such adequate adhesion relies on incorporating adhesion promotors into the base rubber composition.

In that context, various adhesion promotors have been used in the art, including those based on the so-called resorcinol novolacs as described in EP 0 440 036A1 (Hesse et al.), or those based on resorcinol itself as described in US 4,148,769A (Swarts et al.). As well recognized in the art, the use of resorcinol presents health and environmental issues, due in particular to the evaporation of resorcinol during the rubber processing conditions. Moreover, resorcinol-based adhesion promotors tend to show premature ageing particularly under high temperature and/or high humidity conditions. Resorcinol-free adhesion promotors are described in EP 0 473 948 A2 (Singh et al.) and in EP 0 827 971 A1 (Burkhart et al.). The adhesion promotors described in those references either lead to slow vulcanization of the corresponding rubber blends or to undesired fuming during rubber processing.

Other adhesion promotors known to improve the adhesive force between the reinforcing material and rubber compositions make use of cobalt salts. However, cobalt compounds are listed as potentially carcinogenic to humans and therefore poses serious toxicity and environmental problems. Moreover, the use of cobalt compounds is usually associated with unstable supply chain and limited availability which necessarily leads to higher costs. Patent application EP 3 636 700 A1 (Özkütükcü et al.) describes a rubber composition claimed to provide enhanced curing and adhesion properties, and which makes use of a very specific zinc composition referred to as active zinc composition and having a very particular range of specific surface area. The very particular specifications of the required active zinc composition together with the delicate process for obtaining the latter inevitably increase the overall technical complexity and the associated manufacturing costs.

Without contesting the technical advantages associated with the solutions known in the art, there is still a need for an adhesion-promoting system for a rubber composition which overcomes at least partially the above-mentioned deficiencies.

### Summary

According to one aspect, the present disclosure relates to an adhesion-promoting system for a rubber composition, wherein the system comprises a novolac resin prepared by reaction of an aldehyde A1 with a phenolic compound; and an organic manganese salt.

According to another aspect, the present disclosure is directed to a rubber composition comprising the adhesion-promoting system as described above and a rubber component.

In still another aspect of the present disclosure, it is provided a process of manufacturing a rubber article comprising the steps of:
a) providing an adhesion-promoting system as described above;
b) adding the adhesion-promoting system to a rubber component thereby forming a rubber composition as described above; and
c) optionally, vulcanizing or crosslinking or curing the rubber composition.

According to yet another aspect, the present disclosure relates to a method of using an adhesion-promoting system as described above for promoting adhesion between a rubber composition and a reinforcing agent which is in contact with the rubber composition.

### Detailed description

According to a first aspect, the present disclosure relates to an adhesion-promoting system for a rubber composition, wherein the system comprises a novolac resin prepared by reaction of an aldehyde A1 with a phenolic compound, and wherein the adhesion-promoting system further comprises an organic manganese salt.

In the context of the present disclosure, it has been surprisingly found that an adhesion-promoting system as described above is particularly suitable for enhancing adhesion characteristics of a rubber composition, in particular towards reinforcing agents which are typically in contact with the rubber composition in conventional engineered rubber articles.

It has further been found that the adhesion-promoting system according to the present disclosure provides rubber compositions with excellent adhesion characteristics even under drastic conditions such as high temperature and high humidity. This is a particularly surprising finding as manganese salts are known to be very hygroscopic in nature. Accordingly, it would have been intuitively expected that the use of manganese salts would lead to poor adhesion characteristics under exposure to high humidity, in particular in combination with excessive temperature conditions.

Moreover, the adhesion-promoting system as described herein has been found to maintain excellent mechanical properties and characteristics for the cured (or vulcanized) rubber composition, such as rigidity, hardness, flexibility or structural strength. Surprisingly still, the adhesion-promoting system has also been found to maintain outstanding characteristics relating to curing and processability of the rubber composition (such as e.g. curing speed, mixing and compounding properties, flowability, extrudability, applicability, coatability or shapability) in its uncured (or unvulcanized) state.

Without wishing to be bound by theory, it is believed that these excellent characteristics and performance attributes are due in particular to the use of a specific combination of: (a) a novolac resin prepared by reaction of an aldehyde A1 with a phenolic compound; and (b) an organic manganese salt. Still without wishing to be bound by theory, it is believed that this specific combination of components together contributes to provide the rubber composition with advantageous rheological characteristics, in particular viscosity properties, in combination with excellent curing (or vulcanization) characteristics.

The adhesion-promoting systems as described above are further characterized by one or more of the following advantageous benefits: (i) easy and cost-effective manufacturing method, based on readily available starting materials and minimized manufacturing steps; (ii) formulation simplicity and versatility; (iii) relatively safe handling due to the use of low quantity of material or products which may have detrimental effects to the human body or may pose environmental issues; and (iv) ability to use metal-based salts having stable and frictionless supply chain.

In the context of the present disclosure, it has been found a technically and economically viable alternative to the use of cobalt and cobalt salts as adhesion promotors for rubber compositions. The usage of organic manganese salts as described herein is not only deprived from the ESH (environmental safety and health) issues usually associated with cobalt, but also substantially enhance cost efficiency considering that cobalt ores cost 14 times more than manganese ores.

As such, the adhesion-promoting system of the present disclosure is outstandingly suitable for the manufacturing of conventional reinforced engineered rubber articles such as pneumatic tires or conveyor belts, including in automated industrial production lines for rubber articles.

In the context of the present disclosure, the expression "organic manganese salt" is meant to designate a salt comprising a manganese cation and an organic anion, wherein the organic anion is in particular the conjugate base of an organic acid that comprises at least one carbon to hydrogen covalent bond.

The adhesion-promoting system of the present disclosure comprises, as a first component, a novolac resin prepared by reaction of an aldehyde A1 with a phenolic compound.

Novolac resins for use herein are not particularly limited as long as they are prepared by reaction of an aldehyde A1 with a phenolic compound. Suitable novolac resins for use herein will be easily identified by those skilled in the art in the light of the present disclosure.

Advantageous aldehydes A1 for use in the preparation of the novolac resins are aliphatic monoaldehydes which are preferably saturated, having one aldehyde group -CHO, and from 1 to 10 carbon atoms.

In an advantageous aspect, the aldehyde A1 for use herein is selected from the group consisting of formaldehyde, acetaldehyde, propionaldehyde, butyric aldehyde, isobutyric aldehyde, and any mixtures thereof. In a particularly advantageous aspect, the aldehyde A1 for use herein is selected to be formaldehyde.

Virtually all phenolic compounds which have at least one reactive hydrogen atom on the aromatic nucleus and at least one phenolic hydroxyl group - and which are thus at least monofunctional in their reactivity with aldehydes - are suitable for the preparation of the novolac resins for use herein. These include mononuclear or polynuclear phenolic compounds which may be monofunctional, difunctional or trifunctional or have a higher functionality in their reactivity with, for example, formaldehyde. The hydrogen atoms reactive towards aldehydes are those which are in the ortho or para position on an aromatic nucleus relative to a hydroxyl group or another substituent with +I and/or +M effect.

Suitable phenolic compounds for the preparation of the novolac resins are mononuclear and polynuclear hydroxy-aromatics which may have one hydroxyl group (monophenols) or more than one hydroxyl group (polyphenols), and which are optionally substituted by linear, branched or cyclic alkyl groups having from 1 to 20 carbon atoms, by oxyalkyl groups or halogen atoms, and where at least one reactive hydrogen atom is bonded to one of the aromatic nuclei. These phenolic compounds can be used individually or as a mixture. Phenol itself, the various cresol and xylenol isomers, the isomers of ethylphenol, of propylphenol or of isopropylphenol and p- or o-substituted alkylphenols having up to 18, in particular up to 15, carbon atoms in the side chain may be advantageously used. It is also possible to use phenols substituted by olefinically unsaturated groups, such as, for example, o- or p-vinylphenol or p-isopropenylphenol, and phenolic substances reacted with dicyclopentadiene (DCPD) and/or styrene and/or colophony.

Polynuclear monohydric phenolic compounds, such as the isomeric hydroxynaphthalenes, which may optionally be substituted as described above, and mononuclear polyhydric phenols, such as pyrocatechol, resorcinol, hydroquinone, pyrogallol and phloroglucinol, may also be suitably used.

Alternatively, polynuclear polyhydric phenolic compounds such as, for example, isomers of diphenylolmethane, diphenylolethane, diphenylolpropane (bisphenol A) and bishydroxyaryl compounds in which the aromatic structures are linked by a direct bond or an ethenyl, ether, carbonyl, sulphonyl, carbonyloxy or carboxamido group, such as dihydroxybiphenyl, dihydroxystilbene, dihydroxydiphenyl ether, dihydroxybenzophenone, dihydroxydiphenyl sulphone, dihydroxyphenyl benzoate and dihydroxybenzanilide, which are optionally substituted by alkyl or alkoxy groups or halogen atoms as described above, may be suitably used. Other polyhydric polynuclear phenolic compounds, such as, for example, the isomeric dihydroxynaphthalenes and also trihydric and polyhydric hydroxyaromatics may also be suitably used for the preparation of the novolac resins for use herein.

According to an advantageous aspect of the disclosure, the phenolic compound for use herein is selected from the group consisting of phenol, cresols, resorcinol, monoalkylphenols, and any mixtures thereof. According to a particularly advantageous aspect, the phenolic compound for use in the present disclosure herein is selected to be (or comprise) phenol.

In a typical aspect, the novolac resin for use herein is prepared by reaction of an aldehyde A1 with a phenolic compound and further with an acid (catalyst). Suitable acids for use herein are not particularly limited, and are advantageously strong mineral acids and/or their acidic derivatives, in particular sulphuric acid, hydrogen sulphates, in particular of alkali metals or ammonium, half-esters of sulphuric acid with aliphatic alcohols having 1 to 20 carbon atoms, phosphoric acid, hydrochloric acid or organic acids, such as alkanesulphonic and arylsulphonic acids having 1 to 20 carbon atoms, in particular p-toluenesulphonic acid, and the aliphatic monobasic and dibasic carboxylic acids having 1 to 20 carbon atoms, such as chloroacetic acid, trifluoroacetic acid and in particular oxalic acid dihydrate. Lewis acids, such as aluminum trichloride, zinc chloride and tin chloride and boron trifluoride and its etherates, are also suitable.

In an advantageous aspect,, the acid for use herein is selected from the group consisting of oxalic acid, maleic anhydride, dodecyl benzene sulfonic acid, para-toluene sulfonic acid, and any mixtures thereof. Preferably, the acid is selected from the group of oxalic acid and para-toluene sulfonic acid.

The novolac resins for use herein may be prepared by using conventional techniques and processes commonly known to those skilled in the art. Exemplary manufacturing processes are described e.g. in GB1448374 A (Hesse et al.).

According to another advantageous aspect, the adhesion-promoting system of the present disclosure further comprises a urethane-aldehyde resin, which is in particular prepared by condensation of an aldehyde A2 and an alkyl urethane. Such adhesion-promoting systems have been found to provide rubber compositions with further enhanced adhesion promoting effects, in particular towards reinforcing agents.

Urethane-aldehyde resins for use herein are not particularly limited and may be easily identified by those skilled in the art in the light of the present disclosure. In a typical aspect, the urethane-aldehyde resin is prepared by and acid-catalysed condensation of an aldehyde A2 and an alkyl urethane, optionally in the presence of a catalyst.

Suitable aldehydes A2 for use in the synthesis of urethane-aldehyde resins may be selected from the same compounds as listed under A1 in the context of the preparation of novolac resins as described hereinbefore.

In an advantageous aspect, the aldehyde A2 for use herein is selected from the group consisting of formaldehyde, acetaldehyde, propionaldehyde, butyric aldehyde, isobutyric aldehyde, and any mixtures thereof. In a particularly advantageous aspect, the aldehyde A2 for use herein is selected to be formaldehyde.

Alkyl urethanes for use in the synthesis of urethane-aldehyde resins include, but are not limited to, monoalkyl urethanes or alkylene bisurethanes.

In an advantageous aspect, the alkyl urethane for use in the preparation of the urethane aldehyde resins is a monoalkyl urethane which is in particular selected from the group consisting of ethyl urethane, butyl urethane, 2-ethylhexyl urethane, decyl urethane, and any mixtures thereof.

The urethane-aldehyde resins for use herein may be prepared by using conventional techniques and processes commonly known to those skilled in the art. Exemplary manufacturing processes are described e.g. in EP 2 432 810 A1 (Schafer et al.).

The adhesion-promoting system of the present disclosure further comprises an organic manganese salt. Organic manganese salts for use herein are not particularly limited as long as they comprise an organic anion. Suitable organic manganese salts for use herein will be easily identified by those skilled in the art in the light of the present disclosure.

In that context, inorganic manganese salts such as e.g. manganese oxide, manganese sulphate, manganese bromide, manganese carbonate, manganese chloride, or manganese nitrate do not qualify as organic manganese salts in the sense of the present disclosure.

In an typical aspect, the organic manganese salt for use herein comprises an organic anion which is the conjugate base of an organic acid that comprises at least one carbon to hydrogen covalent bond.

Advantageously, the organic manganese salt for use in the present disclosure is a manganese salt of a carboxylic acid, in particular a manganese salt of an aliphatic or an alicyclic carboxylic acid having from 2 to 30 carbon atoms, from 2 to 25 carbon atoms, from 2 to 20 carbon atoms, from 4 to 20 carbon atoms, or even from 6 to 20 carbon atoms.

Advantageously still, the organic manganese salt is a manganese salt of a monocarboxylic acid or of a dicarboxylic acid, in particular a manganese salt of a monocarboxylic acid.

According to a beneficial aspect, the organic manganese salt for use herein is selected from the group of manganese salts of fatty acids and manganese salts of (saturated and unsaturated) aliphatic or alicyclic carboxylic acids having in particular from 6 to 30 carbon atoms.

Preferably, the organic manganese salt is selected from the group consisting of manganese (hexanoate), manganese (heptanoate), manganese (octanoate), manganese (2-ethylhexanoate), manganese (nonanoate), manganese (decanoate), manganese (neodecanoate), manganese (dodecanoate), manganese (hexadecanoate), manganese (octadecanoate), manganese (oleate), manganese (linoleate) manganese (cyclohexanebutyrate), manganese (naphthenates), and any mixtures thereof.

Manganese salts of saturated aliphatic or alicyclic monocarboxylic acids having in particular from 6 to 30 carbon atoms, are particularly beneficial because these have no (or at least limited) adverse effects during the crosslinking or vulcanization of the rubber composition. Further, these particular manganese salts are believed to not only provide advantageous miscibility characteristics with the overall rubber composition, but also to further enhance the adhesion performance between the rubber composition and the reinforcing agent by further promoting either dispersion of the organic salt in the vicinity of the reinforcing agent or adsorption of the organic manganese salt onto the surface of the reinforcing agent.

More preferably, the organic manganese salt is selected from the group consisting of manganese (hexanoate), manganese (2-ethylhexanoate), manganese (neodecanoate), manganese (hexadecanoate), manganese (octadecanoate), manganese (oleate), manganese (linoleate), manganese (cyclohexanebutyrate), and any mixtures thereof.

In a particularly preferred aspect of the disclosure, the organic manganese salt is selected from the group consisting of manganese (2-ethylhexanoate), manganese (neodecanoate), manganese (octadecanoate), and any mixtures thereof.

The organic manganese salts for use herein may be prepared by using conventional techniques and processes commonly known to those skilled in the art. One exemplary general manufacturing process consists in reacting an organic acid, in particular a carboxylic acid, with manganese oxide, manganese hydroxide or manganese carbonate. Another exemplary general production method consists in a) reacting the organic acid, in particular a carboxylic acid, with sodium hydroxide to obtain a sodium salt of that organic acid, and then b) reacting that sodium salt of that organic acid with a manganese chloride.

Alternatively, the organic manganese salts for use herein may be purchased from conventional chemical suppliers.

The composition of the adhesion-promoting system, and in particular the respective content of the novolac resin and the organic manganese salt present in the system, may be varied within a wide range depending on the targeted performance and applications.

According to an advantageous aspect, the adhesion-promoting system comprises:
a) from 5 to 35 wt.%, from 5 to 30 wt.%, from 7 to 25 wt.%, from 10 to 20 wt.%, or even from 10 to 15 wt.%, of the organic manganese salt; and
b) from 65 to 95 wt.%, from 70 to 95 wt.%, from 75 to 93 wt.%, from 80 to 90 wt.%, or even from 85 to 90 wt.%, of the novolac resin;
wherein the weight percentages are based on the overall weight of the adhesion-promoting system.

The adhesion-promoting system according to the disclosure may also take various forms and may be used or incorporated into conventional rubber compositions according to various techniques or configurations.

In one exemplary aspect, the adhesion-promoting system as described herein may take the form of a split system, whereby the novolac resin and the organic manganese salt are used as physically distinct entities and are therefore separately incorporated into conventional rubber compositions using any appropriate sequence.

The split system is advantageous as it allows more flexibility and adjustments with regard to the step(s) of incorporating the novolac resin and the organic manganese salt into conventional rubber compositions, and further provides more formulation flexibility.

In a more advantageous aspect, the adhesion-promoting system is in the form of a (pre)mixture of the novolac resin and the organic manganese salt. The (pre)mixed system is advantageous as it provides a ready-to-use adhesion-promoting composition, which can be conveniently incorporated into conventional rubber compositions according to a one-step addition.

Without wishing to be bound by theory, it is believed that the (pre)mixed system provides enhanced compatibility and miscibility of the organic manganese salt within the rubber composition, when compared to the incorporation of the organic manganese salt alone. This advantageous property is further believed to ultimately translate into enhanced adhesion performance between the rubber composition and the reinforcing agent.

According to the particular aspect whereby the adhesion-promoting system is in the form of a (pre)mixture of the novolac resin and the organic manganese salt, the (pre)mixture may be advantageously in the form of a dispersion, wherein the organic manganese salt is dispersed in the novolac resin. Commercially available organic manganese salt are besides typically in the form of a dispersion in an hydrocarbon solvent.

According to a more advantageous aspect, the (pre)mixture is in the form of a blend, wherein the organic manganese salt is blended with the novolac resin. The blend form is believed to enable further improved compatibility and miscibility of the organic manganese salt and the novolac resin within the rubber composition.

Moreover, the blend enables providing an adhesion-promoting system in a solid form, and which is substantially deprived from the hydrocarbon solvent the commercially available organic manganese salts are typically dispersed into. An adhesion-promoting system in the form of a solid blend is particularly beneficial in the context of typical industrial manufacturing of rubber articles. Exemplary solid blends for use herein may typically take the form of pellets, beads or flakes.

The composition of the blend, and in particular the respective content of the novolac resin and the organic manganese salt present in the system, may be varied within a wide range depending on the targeted performance and applications.

According to an advantageous aspect, the weight ratio of the novolac resin and the organic manganese salt is from 5 : 95 to 35 : 65, from 7 : 93 to 25 : 75, or even from 10 : 90 to 15 : 85 in the blend.

Premixtures of the novolac resin and the organic manganese salt may be prepared according to techniques and processes commonly known to those skilled in the art. One exemplary manufacturing process consists in adding the novolac resin into the organic manganese salt (typically in the form of a dispersion in an hydrocarbon solvent) and heating the reactive mixture until the novolac resin has molten. Thereafter, the mixture is thoroughly homogenized by stirring, and the residual solvent is removed under reduced pressure.

According to another aspect, the present disclosure is directed to a rubber composition comprising the adhesion-promoting system as described above and a rubber component.

Rubber components for use herein are not particularly limited. Virtually, any rubber component commonly known in the art may be used in the context of the present disclosure. Suitable rubber components for use herein will be easily identified by those skilled in the art in the light of the present disclosure. Exemplary rubber components for use herein are amply described e.g. in EP 2 432 810 A1 (Schafer et al.). Particularly suitable rubber components for use herein are sulfur-crosslinkable or those which can be vulcanized with sulfur.

In a typical aspect, the rubber component for use in the rubber composition is selected from the group consisting of natural rubber, polyisoprene (IR), polybutadiene, styrene/butadiene rubber (SBR), acrylonitrile rubber, butyl rubber, ethylene/propylene/diene terpolymer rubber (EPDM), and any mixtures thereof.

The content the adhesion-promoting system present in the rubber composition, may be varied within a wide range depending on the targeted performance and applications.

According to an advantageous aspect, the rubber composition comprises from 0.5 to 15.0 phr, from 0.5 to 12.0 phr, from 0.5 to 10.0 phr, from 1.0 to 8.0 phr, from 1.0 to 6.0 phr, from 1.0 to 5.0 phr, from 1.5 to 5.0 phr, from 1.5 to 4.5 phr or even from 2.0 to 4.0 phr, of the adhesion-promoting system, based on 100 parts by mass of the rubber component.

Regarding the content of the organic manganese salt, and in particular the content of manganese metal, it has been found that although their content in the overall rubber composition may be varied within a wide range, it could be beneficial to control their respective content in the rubber composition for optimized performance, in particular with regard to adhesion performance.

In an advantageous aspect, the rubber composition comprises no greater than 2.00 phr, no greater than 1.80 phr, no greater than 1.60 phr, no greater than 1.50 phr, no greater than 1.40 phr, no greater than 1.20 phr, no greater than 1.00 phr, no greater than 0.80 phr no greater than 0.70 phr no greater than 0.60 phr no greater than 0.50 phr no greater than 0.40 phr no greater than 0.35 phr or even no greater than 0.30 phr, of the organic manganese salt, based on 100 parts by mass of the rubber component.

In another advantageous aspect, the rubber composition comprises from 0.10 to 2.00 phr, from 0.10 to 1.60 phr, from 0.15 to 1.40 phr, from 0.15 to 1.20 phr, from 0.20 to 1.00 phr, from 0.20 to 0.90 phr, from 0.20 to 0.85 phr, from 0.20 to 0.80 phr from 0.20 to 0.70 phr from 0.20 to 0.60 phr from 0.25 to 0.50 phr from 0.25 to 0.40 phr or even from 0.25 to 0.35 phr, of the organic manganese salt, based on 100 parts by mass of the rubber component.

In still another advantageous aspect, the rubber composition comprises no greater than 0.25 phr, no greater than 0.22 phr, no greater than 0.20 phr, no greater than 0.18 phr, no greater than 0.16 phr, no greater than 0.14 phr, no greater than 0.12 phr, no greater than 0.10 phr, no greater than 0.09 phr, no greater than 0.08 phr, no greater than 0.07 phr, no greater than 0.06 phr, or even no greater than 0.05 phr, of manganese metal, based on 100 parts by mass of the rubber component.

In yet another advantageous aspect, the rubber composition comprises from 0.020 to 0.200 phr, from 0.025 to 0.180 phr, from 0.030 to 0.160 phr, from 0.030 to 0.140 phr, from 0.035 to 0.120 phr, from 0.040 to 0.120 phr, from 0.040 to 0.110 phr, from 0.045 to 0.105 phr, from 0.050 to 0.100 phr, from 0.050 to 0.090 phr, from 0.050 to 0.080 phr, from 0.050 to 0.070 phr, or even from 0.050 to 0.060 phr, of manganese metal, based on 100 parts by mass of the rubber component.

In the context of the present disclosure, it has been found that rubber compositions having a content of the organic manganese salt, and in particular a content of manganese metal, outside the above-detailed ranges tend to lead to sub-optimal performance, in particular with regard to adhesion performance between the rubber composition and reinforcing agent(s).

According to a typical aspect, the rubber composition for use herein further comprises reinforcing agents. Reinforcing agents for use herein are not particularly limited. Virtually, any reinforcing agents commonly known in the art may be used in the context of the present disclosure. Suitable reinforcing agents for use herein will be easily identified by those skilled in the art in the light of the present disclosure. Exemplary reinforcing agents for use herein are amply described e.g. in EP 2 432 810 A1 (Schafer et al.).

Advantageously, the reinforcing agents for use herein are in particular selected from the group consisting of reinforcing fibers, reinforcing filaments, reinforcing wires, reinforcing cords, and any combinations thereof.

Advantageously still, the reinforcing agents comprise a material selected from the group consisting of metals (in particular steel), polymers, ceramics, textiles, composites, and any combinations thereof.

As will be easily apparent to those skilled in the art, the rubber composition for use herein may comprise further additives which are customary in the art. Suitable conventional additives include, but are not limited to, vulcanizing or crosslinking or curing agents, filler materials, antiaging agents, antioxidants, tackifiers, mineral oils, plasticizers, processing aids, and any mixtures thereof. Further additives for use herein are amply exemplified e.g. in EP 2 432 810 A1 (Schafer et al.).

According to an advantageous aspect, the rubber composition of the present disclosure further comprises vulcanizing or crosslinking or curing agents, filler materials, additives, and any mixtures thereof. Preferably, the vulcanizing or crosslinking or curing agents for use herein comprise sulphur and/or sulphur donors, optionally in combination with accelerators and/or activators.

The rubber composition as described herein salt may be prepared, processed and crosslinked (or vulcanized) according to techniques and processes commonly known to those skilled in the art, for example using internal mixers, kneaders or mixing rolls.

The adhesion-promoting system and rubber composition of the present disclosure are outstandingly suitable for the manufacturing of conventional reinforced engineered rubber articles.

According to another aspect, the present disclosure is therefore directed to an article comprising a rubber composition as described above. Exemplary articles comprise, but are not limited to, pneumatic vehicle tires, conveyor belts, drive belts, pressure hoses and gaskets.

Advantageously, the article of the present disclosure is an engineered rubber article in particular an engineered rubber article, more in particular a pneumatic vehicle tire or a conveyor belt.

According to still another aspect, the present disclosure is directed to a process of manufacturing an adhesion-promoting system in the form of a blend as described above, wherein the process comprises the steps of: a) preparing the novolac adding the novolac resin into the organic manganese salt (optionally in the form of a dispersion in an organic solvent) thereby forming a reactive mixture, b) heating the reactive mixture until the novolac resin has (fully) molten, c) homogenizing the mixture by stirring, and d) optionally, removing any residual solvent.

The present disclosure further relates to a process of manufacturing an adhesion-promoting system as described above, wherein the process comprises the step of preparing the novolac resin by reaction of the aldehyde A1 with the phenolic compound, in the presence of the urethane-aldehyde resin.

The present disclosure further relates to a process of manufacturing a rubber composition as described above, wherein the process comprises the step of adding the adhesion-promoting system as described above to the rubber component.

In still another aspect of the present disclosure, it is provided a process of manufacturing a rubber article comprising the steps of:
a) providing an adhesion-promoting system as described above;
b) adding the adhesion-promoting system to a rubber component thereby forming a rubber composition as described above; and
c) optionally, vulcanizing or crosslinking or curing the rubber composition.

According to yet another aspect, the present disclosure relates to a method of using an adhesion-promoting system as described above for promoting adhesion between a rubber composition and a reinforcing agent which is in contact with the rubber composition, and wherein the reinforcing agent is in particular selected from the group consisting of reinforcing fibers, reinforcing filaments, reinforcing wires, and any combinations thereof.

The present disclosure further relates to a method of using an adhesion-promoting system as described above in the manufacturing of a rubber article which is in particular selected from the group of pneumatic vehicle tires and conveyor belts.

The present disclosure further relates to method of promoting adhesion between a rubber composition and a reinforcing agent which is in contact with the rubber composition, which comprises the step of introducing an adhesion-promoting system as described above into the rubber composition.

### EXAMPLES

The present disclosure is further illustrated by the following examples. These examples are merely for illustrative purposes only and are not meant to be limiting on the scope of the appended claims.

### Test Methods:

### Evaluation of adhesive properties (Pulling test according to ASTM D2229)

### Preparation of the test pieces for adhesion performance testing (Ex.1 to Ex.4 and Ex.C1 to Ex. C2)

The rubber compositions are subjected to a heat treatment by a double test roller to prepare a rubber sheet having a width of 100 mm, a thickness of 6 mm and a length of 400 mm. Two rubber pieces having a width of 12.5 mm, a thickness of 6 mm and a length of 200 mm are cut out from the rubber sheet. A 3*0.24/9*0.225 HT steel cord plated with brass (Cu 63.5%, Zn 36.5%), available from Kiswire, is sandwiched between the aforementioned two rubber pieces and vulcanized at about 150°C to prepare a rubber composition test piece which the steel cord is adhered to.

### Preparation of the test pieces for adhesion performance testing (Ex.5 to Ex.6):

The rubber compositions are subjected to a heat treatment by a double test roller to prepare a rubber sheet having a width of 100 mm, a thickness of 3 mm and a length of 90 mm. Two rubber pieces having a width of 10 mm, a thickness of 3 mm and a length of 90 mm are cut out from the rubber sheet. A 2*2*0.25 HT steel cord plated with brass (Cu 65%, Zn 35%), available from Bekaert, is sandwiched between the aforementioned two rubber pieces and vulcanized at about 150°C to prepare a rubber composition test piece which the steel cord is adhered to.

### Evaluation method of adhesion performance (Ex.1 to Ex.4 and Ex.C1 to Ex.C2):

A pulling test is conducted by a method in accordance with ASTM D2229 using the aforementioned test pieces, and the adhesive force between the rubber and the steel cord is measured. For the measurement of the adhesive force, the following three types of measurements are carried out.

Initial adhesive force: A test piece is prepared by vulcanization under the above vulcanization conditions, and measurements are conducted after 24 hours.

Adhesive force after hygrothermal aging test: The test piece vulcanized under the above vulcanization conditions are subjected to humidity aging by being placed at 95°C with 100% relative humidity (RH) for 7 days, and then the adhesive force is measured.

Adhesive force after prolonged hygrothermal aging test: The test piece vulcanized under the above vulcanization conditions are subjected to humidity aging by being placed at 95°C with 100% RH for 14 days, and then the adhesive force is measured.

### Evaluation method of adhesion performance (Ex. 5 to Ex.6):

A pulling test is conducted by a method in accordance with ASTM D2229 using the aforementioned test pieces, and the adhesive force between the rubber and the steel cord is measured. For the measurement of the adhesive force, the following three types of measurements are carried out.

Initial adhesive force: A test piece is prepared by vulcanization under the above vulcanization conditions, and measurements are conducted after 24 hours.

Adhesive force after hygrothermal aging test: The test piece vulcanized under the above vulcanization conditions are subjected to water immersion aging by being immersed in hot water at 95°C for 7 days, and then the adhesive force is measured.

Adhesive force after prolonged hygrothermal aging test: The test piece vulcanized under the above vulcanization conditions are subjected to water immersion aging by being immersed in hot water at 95°C for 14 days, and then the adhesive force is measured.

### Raw materials:

In the examples, the following raw materials are used:
**Manganese (2-Ethylhexanoate)** is obtained from Borchers and available in 60wt% in hydrocarbon under the commercial designation Octa-Soligen Manganese 10HS.
**Manganese (neodecanoate)** is obtained from Borchers and available in 60wt% in hydrocarbon under the trade designation Deca Manganese 8.
**Cobalt stearate** (20.5%), commercially available from Borchers under the trade designation Manobond 740C.
**MnO₂,** manganese oxide salt, commercially available from Nantong Runfeng Chemical Co. under the trade designation MnO₂.
**ALNOVOL^{®} PN 320** is a phenolic resin of the novolac type, commercially available from allnex GmbH, Germany.
**Natural Rubber SVR grade,** commercially available from HB Chemical under the trade designation SVR 3L.
**Carbon Black N326 grade,** commercially available from Cabot under the trade designation Regal 300.
**Stearic acid,** commercially available from PT.SUMI ASIH under the trade designation SA 1801.
**Silica,** commercially available from Evonik under the trade designation Ultrasil VN3. **TMQ,** antioxidant, polymerized 2,2,4-Trimethyl-1,1-dihydroquinoline, commercially available from China Sunsine Chemical Holdings Ltd. under the trade designation TMQ.
**Oil,** processing oil, commercially available from Orgkhim Biochemical Holding under the trade designation Norman-346.
**ZnO,** zinc oxide, commercially available from Zink US(Changshu) Metal Co. under the trade designation zinc oxide 210P.
**HMMM,** hexamethoxymethyl melamine, commercially available from allnex under the trade designation Cyrez^{®} 964.
**Sulfur,** sulfur powder, commercially available from Eastman Chemical under the trade designation HDOT 20.
**DCBS,** N,N-dicyclohexyl-2-benzothiazolesulfonamide, commercially available from China Sunsine Chemical Holdings Ltd. under the trade designation DCBS.
**TBBS,** N-tert-butyl-benzothiazole sulfonamide, commercially available from China Sunsine Chemical Holdings Ltd. under the trade designation TBBS.

### Examples:

### Example 1: Preparation of a blend of manganese (2-ethylhexanoate) and a novolac resin (BLEND 1):

Mn 2-Ethylhexanoate (74.2 g, 60% in hydrocarbons) was put into a four-neck roundbottom flask (1 L). Subsequently, the novolac (PN320, 400.0 g) was added and the mixture was heated to 170 °C under protective gas (N2). Once the novolac has molten, the mixture was homogenized by stirring (2 h), and the solvent was removed under reduced pressure (15 mbar, 1.5 h, 170 °C), thereby forming a material having a melt viscosity of about 11060 mPas, a capillary viscosity of about 1110 mPas, and a melting point of about 90°C.

### Example 2: Preparation of a blend of manganese (neodecanoate) and a novolac resin (BLEND 2):

Mn Neodecanoate (474.0 g, 60% in hydrocarbons) was put into a four-neck roundbottom flask (6 L). Subsequently, the novolac (PN320, 2930.2 g) was added and the mixture was heated to 145 °C under protective gas (N2). Once the novolac has molten, the mixture was homogenized by stirring (2 h), and the solvent was removed under reduced pressure (15 mbar, 1 h, 145 - 160 °C), thereby forming a material having a melt viscosity of about 8585 mPas, a capillary viscosity of about 1391 mPas, and a melting point of about 87°C.

### Example 3: Base rubber matrix

To test the adhesion-promoting systems of the invention for their effect in a vulcanizable rubber blend, a base rubber mixture was prepared in a kneader at about 140°C by thorough mixing of the components according Table 1 below.

**Table 1: Base rubber mixture.**

| Component | Parts per hundred rubber (phr) |
|---|---|
| Natural rubber | 100 |
| Carbon black | 55 |
| Silica | 10 |
| Zinc oxide | 6 |
| Stearic acid | 2 |
| TMQ | 1 |
| Oil | 4 |

### Example 4: Exemplary rubber compositions

The following exemplary rubber compositions were prepared by adding the following further materials (added parts per hundred rubber) to separate portions of the base rubber mixture, each of these portions containing exactly 100 phr of natural rubber, during kneading in the sequence of the rows indicated in Table 2 below. Comparative example C1 comprises Co stearate as the organic metal salt, whereas comparative example C2 comprises an inorganic manganese salt. In the rubber composition of Ex.5, the manganese salt and the novolac resin are incorporated into the base rubber mixture as a blend obtained as detailed in the procedure described in example 1. Those two components are incorporated separately into the base rubber mixture in the other exemplary rubber compositions.

**Table 2: Exemplary rubber compositions**

| Additional components | Parts of added components in phr | | | | | | | |
|---|---|---|---|---|---|---|---|---|
| | Ex.1 | Ex.2 | Ex.3 | Ex.C1 | Ex.4 | Ex.C2 | Ex.5 ^{[2]} | Ex.6 |
| Novolac resin | 3.00 | 3.00 | 3.00 | 3.00 | 3.00 | 3.00 | 3.00 | 3.00 |
| Mn (hexa) ^{[1]} | 0.055 | 0.120 | 0.180 | - | - | - | 0.038 | 0.038 |
| Mn (neo)^{[1]} | - | - | - | - | 0.078 | - | - | - |
| Co stearate [1] | - | - | - | 0.075 | - | - | - | - |
| MnO₂^{[1]} | - | - | - | - | - | 0.224 | - | - |
| HMMM | 4.62 | 4.62 | 4.62 | 4.62 | 4.62 | 4.62 | 3.00 | 3.00 |
| Sulfur | 5.00 | 5.00 | 5.00 | 5.00 | 5.00 | 5.00 | 5.00 | 5.00 |
| DCBS | 1.25 | 1.25 | 1.25 | 1.25 | 1.25 | 1.25 | 0.40 | 0.40 |
| TBBS | - | - | - | - | - | 3.00 | 0.80 | 0.80 |

| | | | | | | | | |
|---|---|---|---|---|---|---|---|---|
| ^{[1]} the values represented in Table 2 correspond to the corresponding metal content (in phr). ^{[2]} the manganese salt and the novolac resin are incorporated into the base rubber mixture as a blend. | | | | | | | | |

### Adhesion performance

**Table 3: Results of the adhesion tests.**

| Example | Initial adhesion (in N) | Adhesion after humid aging, 95°C at 100% RH for 7 days (in N) | Adhesion after humid aging, 95°C at 100% RH for 14 days (in N) |
|---|---|---|---|
| Ex.1 | 800 | 350 | 314 |
| Ex.2 | 744 | 327 | 284 |
| Ex.3 | 720 | 282 | 246 |
| Ex.C1 | 812 | 348 | 316 |
| | | | |
| Ex.4 | 765 | - | - |
| Ex.C2 | 677 | - | - |
| | | | |
| Ex.5 | 470 | 350 | - |
| Ex.6 | 435 | 310 | - |

As can be seen from the results shown in Table 3, the adhesion-promoting systems of the present invention (see in particular Ex.1 to Ex.4) when used in rubber compositions provide excellent adhesion performance to brass-plated steel cords, even upon drastic humid aging conditions. These adhesion performance results are very much at par with those obtained using the comparative cobalt salt (Ex.C1). In contrast, it can be seen that the adhesion performance results obtained using an inorganic manganese salt are inferior (by more than 10%) when compared to those obtained using adhesion-promoting systems of the present invention (see Ex.4).

It can further be seen that the adhesion performance results obtained when the manganese salt and the novolac resin are incorporated into the rubber mixture as a blend (see Ex.5) are improved (by almost 10%) when compared to those obtained using a similar composition when those components are added separately into the rubber mixture (see Ex.6).

## Claims

1. An adhesion-promoting system for a rubber composition, wherein the system comprises a novolac resin prepared by reaction of an aldehyde A1 with a phenolic compound; and an organic manganese salt.

2. A system according to claim 1, wherein the organic manganese salt is a manganese salt of a carboxylic acid, in particular a manganese salt of an aliphatic or an alicyclic carboxylic acid having from 2 to 30 carbon atoms, from 2 to 25 carbon atoms, from 2 to 20 carbon atoms, from 4 to 20 carbon atoms, or even from 6 to 20 carbon atoms.

3. A system according to any of claim 1 or 2, wherein the organic manganese salt is selected from the group consisting of manganese (hexanoate), manganese (2-ethylhexanoate), manganese (neodecanoate), manganese (hexadecanoate), manganese (octadecanoate), manganese (oleate), manganese (linoleate) manganese (cyclohexanebutyrate), manganese (naphthenates), and any mixtures thereof.

4. A system according to any of the preceding claims, which comprises:
a) from 5 to 35 wt.%, from 5 to 30 wt.%, from 7 to 25 wt.%, from 10 to 20 wt.%, or even from 10 to 15 wt.%, of the organic manganese salt; and
b) from 65 to 95 wt.%, from 70 to 95 wt.%, from 75 to 93 wt.%, from 80 to 90 wt.%, or even from 85 to 90 wt.%, of the novolac resin;
wherein the weight percentages are based on the overall weight of the system.

5. A system according to any of the preceding claims, wherein the aldehyde A1 is selected from the group consisting of formaldehyde, acetaldehyde, propionaldehyde, butyric aldehyde, isobutyric aldehyde, oxaldehyde, and any mixtures thereof.

6. A system according to any of the preceding claims, wherein the phenolic compound is selected from the group consisting of monohydric phenolic compounds, polyhydric phenolic compounds, and any mixtures thereof.

7. A system according to any of the preceding claims, wherein the novolac resin is prepared by reaction of an aldehyde with a phenolic compound and further with an acid.

8. A system according to any of the preceding claims, which is in the form of a (pre)mixture of the novolac resin and the organic manganese salt.

9. A system according to claim 8, wherein the (pre)mixture is in the form of a blend, wherein the organic manganese salt is blended with the novolac resin.

10. A rubber composition comprising the adhesion-promoting system according to any of the preceding claims and a rubber component.

11. A composition according to claim 10, which comprises no greater than 0.25 phr, no greater than 0.22 phr, no greater than 0.20 phr, no greater than 0.18 phr, no greater than 0.16 phr, no greater than 0.14 phr, no greater than 0.12 phr, no greater than 0.10 phr, no greater than 0.09 phr, no greater than 0.08 phr, no greater than 0.07 phr, no greater than 0.06 phr or even no greater than 0.05 phr, of manganese metal, based on 100 parts by mass of the rubber component.

12. A composition according to any of claim 10 or 11, which comprises from 0.020 to 0.200 phr, from 0.025 to 0.180 phr, from 0.030 to 0.160 phr, from 0.030 to 0.140 phr, from 0.035 to 0.120 phr, from 0.040 to 0.120 phr, from 0.040 to 0.110 phr, from 0.045 to 0.105 phr, from 0.050 to 0.100 phr, from 0.050 to 0.090 phr, from 0.050 to 0.080 phr, from 0.050 to 0.070 phr, or even from 0.050 to 0.060 phr, of manganese metal, based on 100 parts by mass of the rubber component.

13. A composition according to any of claims 10 to 12, which further comprises reinforcing agents which are in particular selected from the group consisting of reinforcing fibers, reinforcing filaments, reinforcing wires, reinforcing cords, and any combinations thereof.

14. A process of manufacturing a rubber article comprising the steps of:
a) providing an adhesion-promoting system according to any of claims 1 to 9;
b) adding the adhesion-promoting system to a rubber component thereby forming a rubber composition according to any of claims 10 to 13; and
c) optionally, vulcanizing or crosslinking or curing the rubber composition.

15. A method of using an adhesion-promoting system according to any of claims 1 to 9 for promoting adhesion between a rubber composition and a reinforcing agent which is in contact with the rubber composition, and wherein the reinforcing agent is in particular selected from the group consisting of reinforcing fibers, reinforcing filaments, reinforcing wires, and any combinations thereof.
